# EUROPEAN PATENT APPLICATION

(11) **EP 1 891 877 A2**
(43) Date of publication of application: **27.02.2008**
(21) Application number: 07015550.2
(22) Date of filing: 07.08.2007
(51) Int. Cl.: A47K 3/00, F16J 15/02, B60J 10/00

(54) **A sealing strip**

(30) Priority: 08.08.2006 GB 0615714
(71) Applicant: CLASSIC MARBLE (SHOWERS) LIMITED, Garvaghey, Ballygawley, County Tyrone BT70 2EW (GB)
(72) Inventor: Hackett, Donald, County Tyrone BT70 2BP (GB)
(74) Representative: Wallace, Alan Hutchinson

(57) **Abstract**

A sealing strip (10) comprising an elongate flexible backing layer (18) on which is provided a layer of sealant (12) and preferably a release liner (14). The backing layer (18) is preferably formed from natural or synthetic rubber and the sealant (12) is preferably a butyl rubber composition. One or more lengths of unstretchable material extend longitudinally of the sealing strip to inhibit longitudinal stretching.

## Description

### Field of the Invention

The present invention relates to a sealing strip, in particular a sealing strip including a sealant which retains its flexibility over a substantial period of time.

### Background to the Invention

It is common for cracks to appear at a join where a fixture such as a bath, shower or the like, is positioned adjacent a wall or floor. It is known to use a sealing or caulking product to seal the join. Such products are often putty-like, and, after application, harden at room temperature. Over a period of time, the product can become brittle or damaged, letting air and moisture into the area surrounding the join, often resulting in moisture damage. Applying a further layer of the product only acts to delay the deleterious effects, until this new layer also becomes ineffective.

Another problem concerns relative movement, especially in an in use vertical direction, between the fixture and the wall and/or floor to which it is fixed. This movement can cause conventional sealing products to fail.

It would be desirable to mitigate these problems. It would also be desirable to provide a sealing strip which can be used during the initial placing of the fixture against an adjacent surface, or to seal a previously positioned fixture.

### Summary of the Invention

A first aspect of the invention provides a sealing strip comprising an elongate flexible member having an obverse surface; and a layer of sealant provided on said obverse face, wherein said elongate flexible member is stretchable, and the strip further includes means for substantially preventing the strip from being stretched in a longitudinal direction.

Preferably, the sealant comprises a butyl rubber based composition. Further preferably, the sealant is a composition having the Trade Name Terostat-81, supplied by Henkel.

Preferably, the flexible member is an elastomer, or is elastomeric. Alternatively, the flexible member is made from natural rubber.

Preferably, the flexible member and the release liner are substantially elongate, the sealant being provided therebetween so as to form an elongate band of sealant.

Preferably, the flexible member is shaped and dimensioned such that a portion thereof is in the form of a flange which extends beyond an edge of the band of sealant present on the flexible member.

A second aspect of the invention provides a sealing strip comprising an elongate flexible member, wherein said elongate flexible member is stretchable, and the strip preferably further includes means for substantially preventing the strip from being stretched in a longitudinal direction.

Further advantageous aspects of the invention will be apparent to those ordinarily skilled in the upon review of the following description of a specific embodiment and with reference to the accompanying drawings.

### Brief Description of the Drawings

An embodiment of the present invention will now be described with reference to the accompanying drawings in which:-
Figure 1 is a perspective view of a sealing strip embodying the present invention, the strip being shown wound in a roll, with a user's hands shown removing the release liner from the sealant;
Figure 2 is a partially cut-away perspective view of the sealing strip shown, in use, providing a seal between a shower tray and an adjacent wall;
Figures 3(a), 3(b) and 3(c) show longitudinal sectional views of the sealing strip, in use, positioning fixtures against walls, the fixtures including a bath, the shower tray of Figure 2 and a work-top respectively.
Figure 4 shows a longitudinal section view of a preferred sealing strip, incorporating a non-elastic material.

### Detailed Description of the Drawings

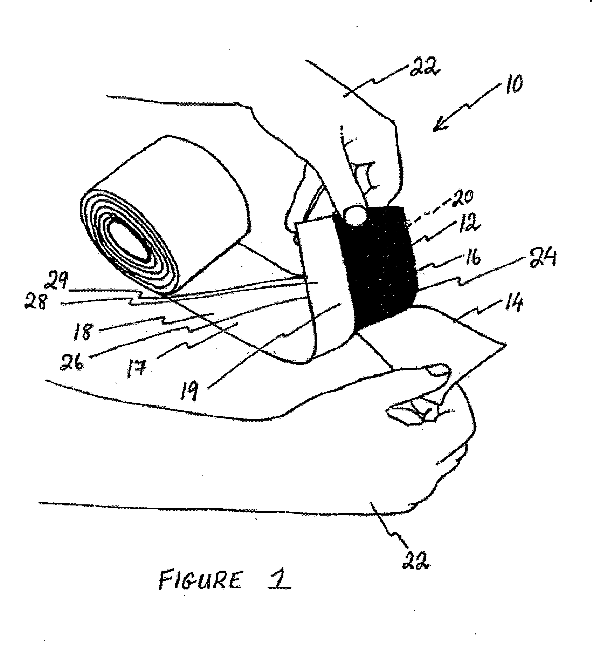

Referring now to the accompanying drawings, there is shown a preferred sealing strip 10 embodying the invention. The strip 10 comprises a strip or layer of sealant 12 and a flexible backing strip or layer 18. The sealant 12, which may take the form of an adhesive, is adhered to the backing layer 18. In the illustrated embodiment, a first, or reverse, surface 20 of the sealant 12 is adhered to a first, or obverse, surface 19 of the backing layer 18. The sealing strip 10 is deployable between a storage state, in which it takes the form of a roll, and a use state in which it is unrolled. Figure 1 shows the strip 10 partly unrolled, the unrolled portion being ready for use.

The sealing strip 10 preferably comprises a flexible release liner 14 releasably adhered to a second, or obverse, surface 16 of the sealant 12, In use, a user may use his hands 22 to unroll the strip 10. The release liner 14 may then be removed from the sealant 12, thereby exposing the obverse surface 16 of the sealant 12 for adhering to an object.

The backing layer 18 is formed from a non-rigid material having a flexibility that allows it to be rolled and unrolled in the manner described above and illustrated in Figure 1. The backing layer 18 is stretchable, preferably resilient and more preferably elastic. The backing layer 18 is stretchable in that it is at least deformable in a transverse direction, i.e. across its breadth. Typically, the backing layer 18 is also stretchable longitudinally. The stretchability enables the layer 18 to accommodate relative movement between fixtures and walls and/or floors during use and the preferred resilience and/or elasticity enables it to maintain its shape over a period of time. The backing layer 18 is typically made from a substantially waterproof or impermeable material. In the preferred embodiment, the backing layer 18 is formed from an elastomer, for example a synthetic rubber or plastics, especially rubber-like plastics. Alternatively, the backing layer 18 may be made from natural rubber.

The backing layer 18 is elongate and substantially planar or flat when in its unrolled state, having first and second opposed surfaces 17,19 located intermediate first and second longitudinal edges 24, 26. In typical embodiments, the backing layer 18 has a width of between 40 mm and 80 mm, preferably approximately 70 mm, and a thickness of approximately 1 mm.

The sealant 12 comprises a flexible, stretchable, and preferably tacky substance, especially with a bonding or adhesive capability. The sealant 12 preferably comprises a soft, plasto-elastic material. The sealant 12 typically comprises a material that is impermeable to water. The preferred sealant is non-setting in that it does not harden or cure at normal working temperatures, e.g. room temperature - it remains a tacky substance, thereby retaining its adhesive properties. The sealant is preferably a composition based on butyl rubber. By way of example, the sealant 12 may comprise a composition having the Trade Name Terostat-81, supplied by Henkel Teroson GmbH, D-69112 Heidelberg, Germany. In typical embodiments, the sealant 12 takes the form of an adhesive layer.

To produce the sealing strip 10, the sealant 12 may be extruded onto the second surface 19 of the backing layer 18 to form a layer or coating of sealant 12. For example, the layer of sealant 12 may be approximately 40 mm in width and approximately 2 mm thick. Typically, the sealant 12 extends, in the longitudinal direction, along substantially the whole length of the strip 10. In the transverse direction, the sealant 12 extends from the first longitudinal edge 24 of the backing layer 18 across part of, preferably approximately 4/7 of, the width of the backing layer 18 towards the second longitudinal edge 26. In this manner, a flange 28 is defined as part of the backing layer 18, the flange 28 extending beyond the sealant 12 in a direction transverse of the strip 10. In the preferred embodiment where the width of the backing layer 18 is approximately 70mm, the sealant strip 12 is approximately 40 mm wide and so the flange 28 extends approximately 30 mm beyond edge 29 of the sealant 12.

The reverse surface 20 of the sealant 12 and the obverse surface 19 of the backing layer 18 are therefore in face-to-face engagement, the tacky nature of the sealant 12 providing strong adhesion to the backing layer 18.

The release liner 14 is formed from a non-rigid material having a flexibility that allows it to be rolled and unrolled in the manner described above. The liner may comprise paper, or a paper based material, preferably having a waterproof coating. Alternatively, any suitable plastics material may be used to make the liner 14. An example of a suitable material is a film of polypropylene, optionally including a silicone coating or the like. The release liner 14 is elongate and substantially planar or flat when in its unrolled state. In the specific embodiment described herein, the release liner 14 preferably has a width of 40 mm to 60 mm, preferably approximately 50 mm. Before use, the liner 14 is releasably adhered to the obverse surface 16 of the sealant 12 and, typically, substantially covers the obverse face 16 of the sealant 12 when adhered thereto. The liner 14 acts as a barrier between the obverse surface 16 of the sealant 12 and the first surface 17 of the backing layer 18, in the rolled-up state, to prevent any undesirable adhesion between the two surfaces 16,17.

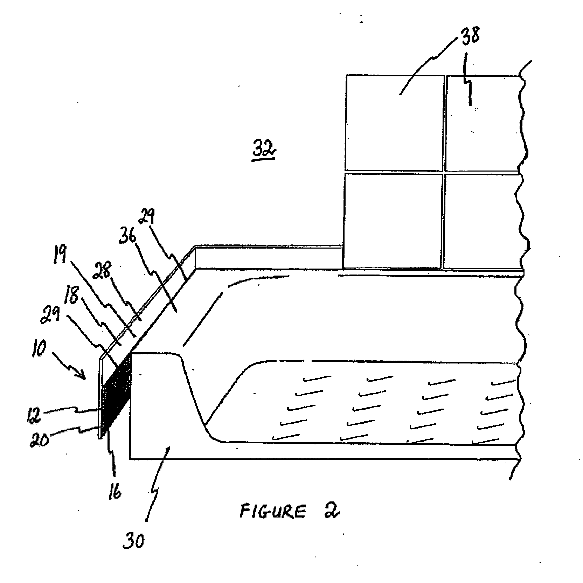

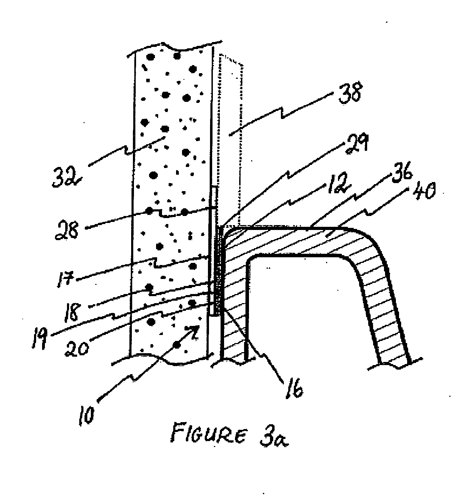

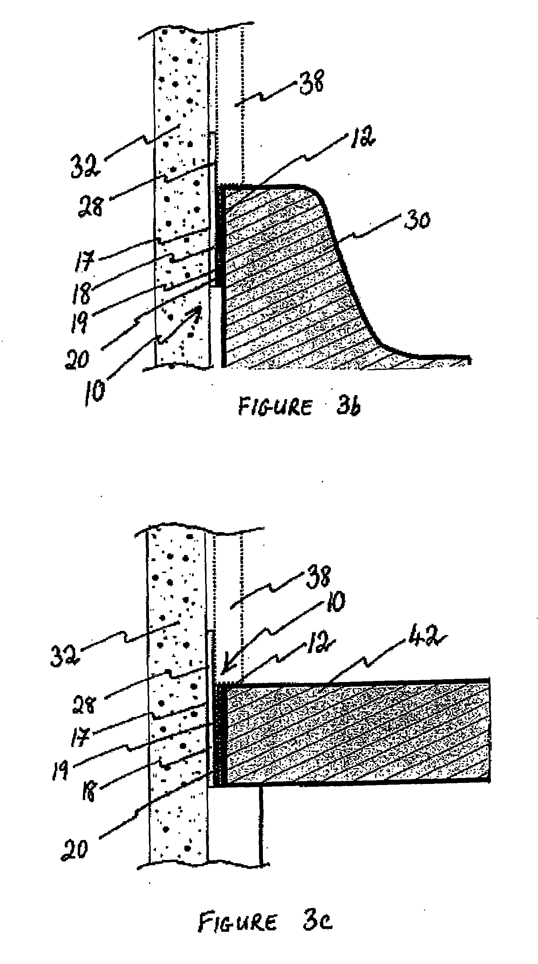

In use, the user unrolls the sealing strip 10 to the required length. Referring to Figure 2, the strip 10 is then aligned with a shower tray 30, or other item, e.g. bath, which is to be positioned adjacent a wall 32 (or other surface). The strip 10 is positioned so that the edge 29 of the sealant 12 is substantially flush with a top surface 36 of the shower tray 30, such that the flange 28 extends beyond the top surface 36 as shown. The user may then remove the release liner 14 from the second surface 16 of the sealant 12. The second surface 16 is then carefully adhered to the shower tray 30 as shown in Figures 2 and 3b, by applying pressure to the first surface 17 of the backing layer 18,

Once the sealing strip 10 has been adhered to the shower tray 30, the strip 10 lies between the shower tray 30 and the wall 32 and tiles 38 may be placed over the flange 28 to further secure the strip 10 in place. In Figure 3b, the sealing strip 10 is shown providing a seal between the shower tray 30 and the wall 32. Any moisture seeping between the tiles 38 and the top surface 36 of the shower tray 30 is prevented from travelling down the sides of the shower tray 30 by the waterproof sealant 12. Furthermore, since the flange 28 extends upwardly behind the tiles 38, water present around the top surface 36 is unable to travel behind the backing layer 18. Thus, the sealing strip 10 provides an effective barrier against moisture damage in the areas surrounding the join of the shower tray 30 to the wall 32.

It will be apparent that the strip 10 may be used with a variety of fixtures or sanitary ware, including but not limited to a bath 40 as shown in Figure 3a, and a work-top 42 as shown in Figure 3c.

The flexibility of the backing layer 18 also enables the sealing strip 10 to be used effectively at corners. Moreover, the elasticity of the backing layer 18 allows the strip 10 to accommodate relative movement between the shower tray 30 and the wall 32. In particular, the ability of the backing layer 18 to stretch resiliently in its transverse direction accommodates relative movement that is substantially vertical in use. In addition, the flexibility of the sealant 12 enables the sealing strip 10 to accommodate displacement of fixtures with respect to the adjacent surface (e.g. wall or floor). Typically, the strip 10 will accommodate a relative vertical, or transverse, movement of at least 15 mm.

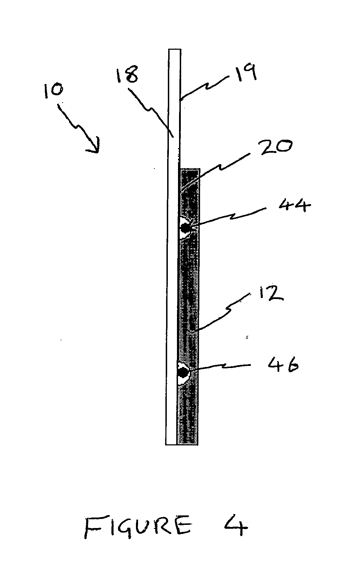

Advantageously, the strip 10 includes means for preventing, or substantially preventing, the strip 10 from stretching in the longitudinal direction, i.e, along the length of the strip. Preferably, the stretch preventing means is arranged such that it does not prevent stretching of the strip in the transverse direction, i.e. across the breadth of the strip. Referring to Figure 4, in preferred embodiments, the sealing strip 10 comprises one or more lengths of a substantially unstretchable (at least in a longitudinal direction), material 44 running substantially longitudinally of the strip 10. The or each length of unstretchable, or non-elastic, material 44 is preferably arranged to run substantially parallel with the longitudinal axis of the backing layer 18 (and therefore typically also of the sealant 12 and the release liner 14). Preferably, the material 44 is located in register with a fixture-engaging portion of the strip 10 that is, in use, sandwiched between the fixture and the wall, or other surface. For example, the material 44 is not provided in the region of the flange 28, but rather in the region of the sealant 12.

In the illustrated embodiment, the unstretchable material 44 takes the form of a plurality of threads, fibres or cords 46, but may alternatively take any other suitable form, e.g. beading, strips or webbing. The cords 46 are preferably provided between the backing layer 18 and the sealant 12 or within the backing layer 18 and/or sealant 12. For example, the cords 46 may be fixed to, incorporated into and/or embedded in the backing layer 18 and/or the sealant 12. The preferred arrangement is that the material 44 does not protrude or cause protrusions beyond the obverse and reverse surfaces of the strip 10.

The material 44 serves to substantially prevent or inhibit longitudinal stretching of the sealing strip 10 when the sealing strip 10 is being positioned, in particular when the sealing strip is being positioned around corners, but advantageously without preventing transverse stretching of the sealant 12, or of the backing layer 18. By way of example, the material 44 may comprise nylon or other suitable plastics, or metal. Preferably, two or more, spaced apart and substantially parallel cords 46 are provided, as shown in Figure 4.

In alternative embodiments (not shown) one or more lengths of said substantially unstretchable or non-elastic material 44, 46 are incorporated into a sealing strip comprising a layer or strip of flexible sealant, the sealant strip itself being stretchable in a longitudinal direction. The substantially unstretchable, or non-elastic, material is arranged to run longitudinally of the strip, for example as described above, to prevent or inhibit longitudinal stretching of the strip while not preventing transverse stretching. Hence this aspect of the invention is not limited to use with the particular strip 10 described herein or to the provision of a backing layer and/or release strip.

It will be understood that the present invention is not limited to the embodiment described herein. For example, the properties of the components 12,14,18 of the sealing strip 10 are not limited to those described herein. For example, although butyl rubber based compositions such as Terostat-81 are the preferred compositions for the sealant 12, it will be apparent that the sealant 12 may alternatively comprise any other suitable composition(s).

It will be appreciated that the shape and dimensions of the sealing strip 10 may also be adapted as desired. In particular, the backing layer 18 is not limited to having a width suitable to form the flange 28.

## Claims

1. A sealing strip comprising an elongate flexible member having an obverse surface; and a layer of sealant provided on said obverse surface, wherein said elongate flexible member is stretchable, and the strip further includes means for substantially preventing the strip from being stretched in a longitudinal direction.

2. A sealing strip as claimed in claim 1, wherein said preventing means comprises at least one length of substantially unstretchable material extending longitudinally of the sealing strip, preferably along substantially the entire length of the strip.

3. A sealing strip as claimed in claim 2, wherein said at least one length of substantially unstretchable material comprises one or more threads, strips, cords or fibres.

4. A sealing strip as claimed in claim 2 or 3, wherein said at least one length of substantially unstretchable material runs substantially parallel with the longitudinal axis of the sealing strip.

5. A sealing strip as claimed in any preceding claim, wherein said preventing means is located in register with a fixture-engaging portion of said strip.

6. A sealing strip as claimed in any preceding claim, wherein the sealant comprises a flexible and preferably stretchable material that is substantially impermeable to water.

7. A sealing strip as claimed in any preceding claim, wherein the sealant comprises an adhesive and preferably tacky material, preferably a material comprising butyl rubber.

8. A sealing strip as claimed in any preceding claim, further including a release liner releasably adhered to said layer of sealant.

9. A sealing strip as claimed in any preceding claim, further including a flange portion extending longitudinally of the strip adjacent a fixture-engaging portion of the strip.

10. A sealing strip as claimed in any preceding claim, wherein said flexible member is resilient, and preferably elastic.

11. A sealing strip as claimed in any preceding claim, wherein the strip is capable of being rolled and unrolled along its length between a rolled state and a deployed state.
